# FASCICULE DE BREVET EUROPEEN

(11) **EP 4 025 527 B1**
(45) Date de publication et mention de la délivrance du brevet: **03.07.2024**
(21) Numéro de dépôt: 20799765.1
(22) Date de dépôt: 03.09.2020
(51) Int. Cl.: B65G 47/94, B65G 69/04, C05F 17/957

(54) **PROCÉDÉ ET DISPOSITIF DE CHARGEMENT D'UN MATERIAU EN STRATES ET INSTALLATION COMPRENANT UN TEL DISPOSITIF**
VERFAHREN UND VORRICHTUNG ZUM SCHICHTWEISEN LADEN EINES MATERIALS UND SYSTEM MIT EINER SOLCHEN VORRICHTUNG
METHOD AND DEVICE FOR LOADING STRATA MATERIAL AND INSTALLATION COMPRISING SUCH A DEVICE

(30) Priorité: 04.09.2019 FR 1909707
(43) Date de publication de la demande: 13.07.2022
(73) Titulaire: JUA, 34967 Montpellier Cedex 2 (FR)
(72) Inventeur: SALLUSTRO, Jean-Luc, Trou-aux-Biches (MU)
(74) Mandataire: Schmidt, Martin Peter
(86) Numéro de dépôt international: PCT/FR2020/000231
(87) Numéro de publication internationale: WO 2021/044084

(56) Documents cités:
- EP-A1- 0 281 699
- DE-C- 800 737
- DE-U- 1 867 385
- FR-A1- 2 473 038
- US-A- 3 348 678

## Description

### Domaine technique de l'invention

La présente invention concerne un procédé et un dispositif permettant le chargement d'un matériau en strates. Elle vise plus particulièrement, mais non exclusivement, le compostage de déchets organiques dans une enceinte close, particulièrement en silo, bennes ou couloirs, avec ventilation forcée, humectage contrôlé et séparation de phases.

### État de la technique antérieure et de la problématique

De nombreux procédés industriels, visant le traitement de matériaux, utilisent un chargement en strates de ces matériaux. À titre d'exemple non limitatif, on citera le compostage. Cependant, la présente invention trouve également son application à d'autres types d'opérations telles que le chargement de plans de couche pour la culture de champignons, les bacs de semis sur des pépinières de grande taille, les bacs de séchage de récoltes de fruits, légumes, graines,

Le compostage est une opération très répandue qui consiste à pratiquer l'oxydoréduction aérobie essentiellement bactérienne de matières organiques pour produire un substrat humique où l'azote est minéralisée et à l'issue duquel les matières fortement polymérisées telles que la cellulose sont partiellement dégradées. Les techniques de compostage les plus simples ont une durée métabolique, ou temps de rétention biologique, pouvant aller jusqu'à plusieurs mois ce qui impose un espace d'opération important et présente des risques élevées de pertes de nutriments et particulièrement de l'azote par lixiviation ou volatilisation. A l'inverse les techniques élaborées qui permettent de procéder à une opération de compostage intensifiée ont une courte durée métabolique, n'utilisent que peu d'espace et préservent la quasi intégralité des nutriments natifs.

Généralement un procédé de compostage aérobie intensifié adopte a minima les aménagements suivants :
- Un dispositif de conteneurisation des volumes de déchets ou matières organiques traitées qui peut être un andain bâché, une benne fermée, un couloir fermé ou un silo fermé afin d'une part de protéger les matières traitées des agressions extérieures et pour d'autre part préserver l'environnement extérieur des nuisances qui pourraient survenir du fait du processus de compostage.
- Un système de contrôle de la température et de l'humidité, éventuellement du flux respiratoire, en l'occurrence la part de CO2 dans les gaz rejetés, associé à un dispositif d'injection d'eau pure ou d'une solution aqueuse de nutriments afin de gérer et de maintenir l'hygrométrie la plus adaptée à chaque phase du processus.

Avec l'aide de ces dispositifs, un procédé de compostage aérobie thermophile sous andain couverts et ventilés avec humectage contrôlé est à même de favoriser au mieux l'émergence, la prolifération et l'activité métabolique de micro-organismes aérobies qui bénéficient de l'accroissement de la vitesse du transfert de l'oxygène des espaces lacunaires présents dans le substrat et qui profitent aussi de la protection du couvert.

Dans ce contexte, la première phase de compostage dite d'amorçage est mésophile et très brève, lui succède la seconde phase thermophile car le substrat atteint pendant cette phase des températures de l'ordre de 55°C à 75°C. La phase thermophile s'achève spontanément lorsque les micro-organismes spécifiques de cette phase disparaissent, d'une part parce qu'ils ont bénéficié de suffisamment d'oxygène pour achever l'oxydoréduction des nutriments disponibles dans le substrat et, d'autre part, quand le milieu constitué par l'andain ne leur est plus favorable, notamment en termes d'hygrométrie ou trop riche en vides lacunaires permettant l'intrusion d'air à un débit supérieur à 0,4 litre par minutes. La dernière phase est maturante et mésophile et peut durer relativement longtemps jusqu'à la stabilisation complète du substrat, par minéralisation et atteinte d'un équilibre biochimique entre les différentes variétés humiques.

Un procédé de compostage intensifié consiste donc à créer un écosystème au sein duquel la cyclicité métabolique respecte la succession de ces trois phases tout en y favorisant des échanges biochimiques et une activité microbiologique exceptionnellement active en un minimum de temps, donc dans un volume très réduit par rapport à un procédé naturel.

Dans le cas des procédés de compostage intensifié à alimentation continue et dans une moindre mesure pour des procédés à alimentation séquentielle, il faut pratiquer un chargement horizontal des andains, c'est à dire par strates successives, pour respecter cette cyclicité métabolique car l'organisation en couches est physiquement en cohérence avec l'organisation des cycles et de leurs gradients de température. La couche la plus récente est très respirante et amorce une bio-oxydation mésophile, elle reçoit des couches inférieures thermophiles les plus proches un apport en chaleur et en humidité important par convection verticale, alors que les couches inférieures une fois émottées sont en cycle mésophile avec une architecture favorable aux vides lacunaires.

Par ailleurs la majorité des procédés de compostage intensifiés à alimentation continue, parce qu'ils trouvent avantage à réaliser un chargement en couches successives, doivent faire intervenir des moyens mécaniques externes aux couloirs, bennes ou silos. Le plus simple de ces moyens consiste à utiliser un chargeur mécanique sur roues, les plus complexes de ces moyens consistent à utiliser un pont mobile enjambeur équipé d'une benne de chargement ou d'une bande convoyeuse avec un soc racleur mobile, autant de dispositifs coûteux et relativement peu précis dans la constitution de couches homogènes de substrat.

Enfin l'accumulation dans une enceinte close de couches successives de matières en cours de compostage conduit immanquablement à la compression et au tassement de ces matières, au point que dans un andain en enceinte close d'une certaine hauteur la couche inférieure la plus basse, donc la plus mature du fait de son temps de rétention biologique, peut être compactée à un point tel qu'elle ne s'écoulera pas librement du simple fait de la gravité. Pour pallier ce problème la plupart des installations utilisent un système de vis transporteuse en fond de trémie mais il n'est pas rare que la géométrie même de la trémie accroisse le phénomène de compaction jusqu'à produire un effet de voûte définitif.

On citera également le brevet français 2 473 038, qui divulgue un dispositif selon le préambule de la revendication 8 et concerne une installation pour la transformation des déchets organiques en compost. Cette installation comporte au moins une tour de fermentation parallélépipédique, ainsi qu'une vis d'évacuation horizontale. Cette dernière peut être entraînée à la fois en rotation ainsi qu'en translation, de façon à pouvoir intervenir sur toute la section de la tour.

On a en outre proposé, par la demande de brevet européen 281 699, une installation de compostage comprenant un silo, ainsi que des chambres s'étendant à travers ce silo pour fournir de l'air d'aération. Un premier convoyeur permet d'alimenter la matière en direction du sommet de ce silo, alors qu'un convoyeur supplémentaire permet le transfert en direction du silo proprement dit.

L'enseignement des deux documents mentionnés ci-dessus appartient un simple arrière-plan technologique de la présente invention.

Compte tenu de ce qui précède, un objectif de l'invention est de remédier, au moins en partie, aux inconvénients de l'art antérieur présentés ci-dessus.

Un autre objectif de l'invention est de proposer un procédé permettant le chargement d'un matériau en strates, selon des couches successives qui sont non seulement régulières en épaisseur, mais également réparties de manière satisfaisante.

Un autre objectif de l'invention est de proposer un tel procédé, qui peut être mis en oeuvre moyennant une dépense énergétique particulièrement faible.

Un autre objectif de l'invention est de proposer un tel procédé, qui peut être mis en oeuvre grâce à un dispositif dont la prise au sol est très limitée.

Un autre objectif de l'invention est de proposer un tel procédé, qui peut être mis en oeuvre dans une enceinte dont la hauteur est importante.

### Objets de l'invention

Selon l'invention, au moins un des objectifs ci-dessus est réalisé par un procédé de chargement d'un matériau en strates, selon la revendication 1 annexée.

Des caractéristiques avantageuses du procédé de l'invention font l'objet des revendications 2 à 7 annexées.

L'invention a également pour objet un dispositif de chargement d'un matériau en strates, selon la revendication 8 annexée.

Des caractéristiques avantageuses du dispositif de l'invention font l'objet des revendications 9 à 13 annexées.

L'invention a enfin pour objet une installation de traitement d'un matériau en strates, selon la revendication 14 annexée.

Le procédé conforme à l'invention fait tout d'abord appel à un premier équipement, lequel permet l'alimentation continue par strates. Cet équipement comprend un convoyeur à bande intégré à l'enceinte de compostage, capable de basculements latéraux alternatifs qui permettent le chargement des andains en couches successives et homogènes favorisant ainsi lesdits processus de compostage, sans qu'il soit nécessaire de mobiliser un chargeur externe ni d'ouvrir l'enceinte de compostage. Plus généralement la présente invention concerne aussi un dispositif qui permet le chargement de matières en couches successives à l'intérieur d'une enceinte ou sur un andain, sans intervention d'un ensemble mécanique extérieur mobile.

L'invention fait avantageusement appel à un second équipement, lequel permet le décompactage et le déchargement d'une couche inférieure du matériau. Ce second équipement trouve plus particulièrement, mais non exclusivement, son application dans le cas où le matériau en strates est formé par du compost. Ce second équipement comprend une série de couples de rouleaux émotteurs en rotation opposée, qui sont disposés à mi-hauteur du silo et en fond de silo ou d'enceinte. La strate basse d'émotteurs décompacteurs surplombe un convoyeur à bande ou à fond mouvant qui reçoit par gravité le compost émotté et l'évacue hors de l'enceinte.

L'invention qui fait l'objet de la présente demande de brevet est également fondée sur la configuration et les équipements dédiés d'une enceinte fermée de forme parallélépipédique, de type benne ou silo, d'une hauteur n'excédant avantageusement pas 10 mètres, d'une largeur n'excédant avantageusement pas 5 mètres et d'une longueur n'excédant avantageusement pas 20 mètres. De manière préférée, les dimensions de l'enceinte ne dépassent pas une hauteur de 6 mètres, une largeur de 2,2 mètres et une longueur de 12 mètres. Cette enceinte est alimentée en matières organiques broyées et mélangées au sol en proportions raisonnables de la fraction structurante et de la fraction volatile.

Le mélange de matières ainsi préparé est typiquement acheminé du sol vers le haut du silo par un convoyeur préliminaire, de type à bande oblique ou de type vertical à godets. En haut de l'enceinte le convoyeur à bande, tel que décrit ci-dessus, reçoit les matières. Lorsque ce convoyeur est complètement chargé, il est stoppé puis basculé mécaniquement d'un côté puis de l'autre de son axe longitudinal avec un angle pouvant aller typiquement jusqu'à 60°. Un dispositif mécanique, composé par exemple de deux peignes métalliques placés au long de l'enceinte sur ses deux côtés au-dessus de la couche d'alimentation, est associé au mouvement de bascule du convoyeur. Ce dispositif permet, de manière avantageuse, de niveler sommairement les deux cônes de déchargement formés de chaque côté et en contrebas du convoyeur basculant.

La série de rouleaux émotteurs, telle que décrite ci-dessus, est disposée à mi-hauteur de l'enceinte et au bas de l'enceinte. Ces strates couvrent toute la surface de l'enceinte au plan horizontal. La première est située à environ 3 mètres sous le niveau du convoyeur basculant et la seconde à environ 1 mètre du plan de réception d'un convoyeur à bande ou d'un convoyeur à fond mouvant, disposé au point le plus bas de l'enceinte au niveau du sol. Le compost le plus mûr est donc celui de la couche la plus basse et il se trouve en appui sur les rouleaux émotteurs de la strate la plus basse.

Conformément au procédé décrit dans le brevet français 2 936 519, un double dispositif aéraulique, un dispositif d'aspersion et un réseau de collecte des lixiviats complètent avantageusement l'équipement de l'enceinte. Le double dispositif aéraulique est typiquement constitué d'une part d'un compresseur d'air capable d'injecter environ deux fois le volume utile du silo en une heure avec une pression d'environ 200 kPa et d'autre part d'un ventilateur surpresseur capable d'aspirer une fois le volume de l'enceinte en une heure et d'injecter ce volume avec une pression d'environ 20 kPa. Le compresseur est à la base de la ventilation primaire, à cet effet il injecte de l'air extérieur dans l'enceinte juste en-dessous de la ligne des deux strates de décompacteurs avec des débits différents qui respectent les besoins des deux phases. Le ventilateur surpresseur est à la base de la ventilation secondaire, à cet effet il aspire l'air « respiratoire » dans le haut de l'enceinte au-dessus de la couche de matières fraîches et le réinjecte au-dessus du convoyeur à bande ou à fond mouvant, qui évacue le compost émotté de manière à ventiler le compost mûr qui y est stocké en attente d'évacuation. Le compost mûr prêt à être évacué fait donc effet de filtre biologique car il capture les charges organiques olfactives transportée par la vapeur respiratoire du haut de l'enceinte, ce qui a aussi pour effet d'annuler les pertes de nutriments par volatilisation.

La rampe d'aspersion, placée au-dessus de la couche supérieure de matières fraîches, se distribue en plusieurs canalisations perforées ou équipées de gicleurs ou buses d'aspersion selon la nature du fluide d'humectage qui définit aussi le diamètre des tuyaux. Sa configuration est telle que la répartition du fluide se fait équitablement sur toute la surface de la couche supérieure de matières fraîches sans gêner le basculement du convoyeur d'alimentation. Une ou deux rampes supplémentaires de moindre encombrement peuvent être disposées à des étages inférieurs du silo pour améliorer l'humectage en cas de matières ayant une forte propension à la compaction.

De façon typique, le réseau de récupération des lixiviats est essentiellement constitué d'un égout de réception placé à l'extrémité de sortie des composts mûr en léger contrebas du convoyeur d'évacuation, l'enceinte étant installé sur site avec une faible pente longitudinale (3 % au maximum) dont le point bas est du côté de la sortie des composts mûrs. Cet égout collecteur parallèle au petit côté de l'enceinte est lui-même connecté par gravité à une cuve enterrée disposant d'un dispositif de séparation des matières solides (de type chicane avec bac filtrant amovible) et peut accueillir une pompe de relevage immergée ou la crépine d'une pompe de surface.

L'intérêt de cet agencement d'équipements et de dispositifs dédiés est manifeste pour des installations de compostage intensifié, avec des enceintes de type benne ou silo, car il permet de charger les andains par le haut du silo couches successives régulières en épaisseur et bien réparties. De plus l'enceinte peut être relativement haute et intégrer au niveau supérieur le dispositif d'alimentation en strates successives qui ne nécessite que très peu d'énergie pour fonctionner, contrairement à des moyens externes mécaniques usuels ou aux moyens mécaniques complexes et peu précis qui auraient par ailleurs du mal à opérer à des hauteurs supérieures à 5 mètres.

L'avantage d'un tel écosystème de compostage fermé est d'installer et de maintenir aisément la séparation de phases ; la couche supérieure est mésophile en amorçage sur environ 200 mm alors que dès 200 mm jusqu'à au premier rang de décompacteurs c'est à dire au coeur de l'andain le statut microbiologique est nettement thermophile. Dans le cas où un deuxième rang de décompacteur s'avérerait nécessaire (déchets hautement volatiles avec un besoin en biodégradabiliét élevé) il est possible d'installer un second rang de décompacteurs et jusqu'auquel le métabolisme microbiologqiue est deviendra progressivement mesophile. Dans tous les cas, les matières extraites et maintenues dans le couloir d'évacuation sont en activité mésophile décroissante typiques d'une fin de maturation. La régulation biologique qui permet cette séparation de phase, du fait d'une gestion aéraulique et hydraulique précise de l'andain a été développée dans le brevet français 2 936 519.

Un autre avantage de ce système en silo ou benne est qu'il n'a qu'une très faible prise au sol par rapport à un système en andain ou en couloirs tout en assurant une parfaite maîtrise des risques environnementaux liés aux émanations de gaz respiratoires ou de lixiviats qui peuvent générer des risques sanitaires ("poumon du fermier"), olfactifs ou biologiques.

Enfin l'émottage permet non seulement de vaincre la compaction qui serait sinon inévitable au bas de l'enceinte, mais aussi de réduire la granulométrie du compost et d'en doser le volume d'évacuation en équilibre avec le volume d'alimentation.

L'invention va être décrite ci-après, en référence aux dessins annexés, donnés uniquement à titre d'exemple non limitatif, dans lesquels :
[Fig. 1] est une vue en bout, illustrant une installation de traitement équipée d'un dispositif de chargement d'un matériau en strates, susceptible d'être mis en oeuvre grâce au procédé de chargement conforme à l'invention.
[Fig. 2] est une vue de face, illustrant l'installation de traitement de la figure 1.
[Fig. 3] est une vue de face, illustrant le dispositif de chargement appartenant à l'installation des figures 1 et 2.
[Fig. 4] est une vue de dessus, illustrant le dispositif de chargement appartenant à l'installation des figures 1 et 2.
[Fig. 5] est une vue en bout, illustrant le dispositif de chargement appartenant à l'installation des figures 1 et 2.
[Fig. 6] est une vue de face analogue à la figure 3, illustrant d'autres détails constructifs du dispositif de chargement des figures 3 à 5.
[Fig. 7] est une vue de dessus analogue à la figure 4, illustrant d'autres détails constructifs du dispositif de chargement des figures 3 à 5.
[Fig. 8] est une vue en bout analogue à la figure 4, illustrant d'autres détails constructifs du dispositif de chargement des figures 3 à 5.
[Fig. 9] est une vue en bout, illustrant une première position fonctionnelle du dispositif de chargement, mis en oeuvre conformément au procédé de chargement selon l'invention.
[Fig. 10] est une vue en bout, illustrant une deuxième position fonctionnelle du dispositif de chargement, mis en oeuvre conformément au procédé de chargement selon l'invention.
[Fig. 11] est une vue en bout, illustrant une troisième position fonctionnelle du dispositif de chargement, mis en oeuvre conformément au procédé de chargement selon l'invention.
[Fig. 12] est une vue en perspective, illustrant une installation de traitement conforme à une variante de réalisation de l'invention.

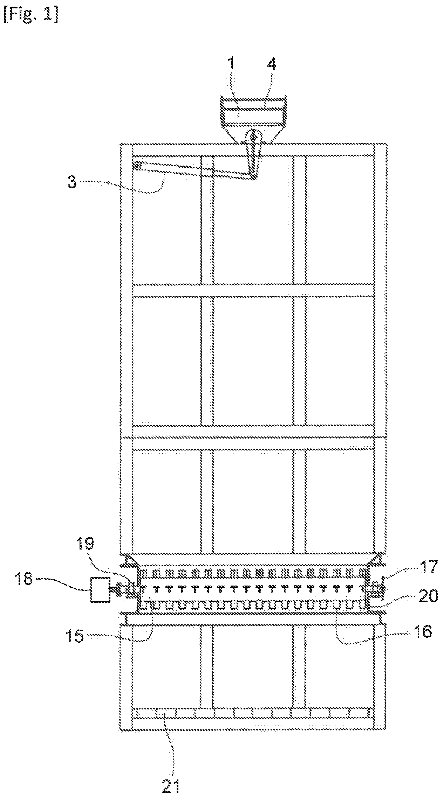

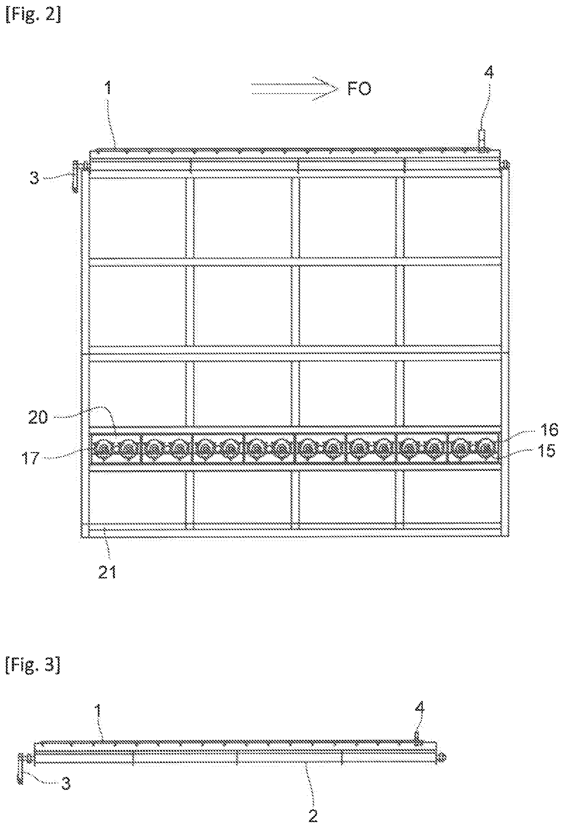

Le dispositif de chargement conforme à l'invention comprend principalement un convoyeur à bande (1), un axe longitudinal (2), un dispositif de basculement (3), un dispositif d'automation (4), ainsi qu'optionnellement deux peignes de nivellement des cônes de déchargement, formés en tout matériau approprié. Comme cela est visible notamment sur les figures 1 et 2, ce dispositif de chargement est placé en partie supérieure d'une installation permettant le traitement du matériau, primitivement chargé au moyen de ce dispositif.

Le convoyeur à bande (1) comprend généralement un châssis (5) composé de deux rails latéraux avec des entretoises et des rouleaux et une bande de chargement composée de préférence d'une succession de mailles planes (6) organisées en chaînes plutôt qu'une bande tissée enduite ou en composite élastique ou non. Un ou plusieurs rouleaux doivent être motorisés par connexion externe à un moteur électrique ou hydraulique ou avec un moteur intégré à certains rouleaux. Des guides latéraux disposés de place en place sur le côté et au long de la bande du convoyeur, sur sa face supérieure, préviennent avantageusement le décalage de la dite bande sous l'effet de la gravité lors des basculements du convoyeur

L'axe longitudinal (2) est, au plus simple, composé d'un tube (8) traversant des supports triangulaires (9) auxquels il est attaché et qui sont reliés par le haut au bas du châssis du convoyeur (5). A chacune de ses extrémités ce tube repose sur un palier (10) et à l'une d'entre elle il est relié à un bras perpendiculaire, ou bras de couplage (11) qui est connecté au dispositif de basculement (3).

Le dispositif de basculement (3) est, au plus simple, composé d'un vérin à double effet (3), hydraulique ou pneumatique, éventuellement électrique pour les petites installations. L'extrémité du cylindre (13) de ce vérin est articulée sur un support fixe et l'extrémité de la tige de piston du vérin (14) est articulée sur l'extrémité basse du bras de couplage (11). Le vérin est placé perpendiculairement au bras de couplage (11) auquel il imprime une poussée dans un sens et une traction dans l'autre sens qui ont pour effet une semi rotation de l'axe longitudinal, entraînant de fait dans sa rotation partielle le châssis du convoyeur à bande. Le retour du convoyeur à l'horizontal résulte d'une poussée ou traction intermédiaire qui ramène le bras de couplage (11) à la verticale.

Le dispositif d'automation (4), lequel a un double objectif, permet d'une part de stopper automatiquement le déroulement de la bande du convoyeur (6) quand celui-ci est chargé à satisfaction sur toute sa longueur. D'autre part, il permet d'alterner automatiquement le basculement d'un côté à l'autre de l'axe du convoyeur (2). Pour le premier besoin ce dispositif peut valablement résulter de l'emploi d'une cellule photoélectrique (4) placée à l'extrémité du convoyeur à hauteur du point haut moyen de son chargement et dont le faisceau sera interrompu quand le chargement viendra à interférer entre l'émetteur et le récepteur de la cellule. Cette cellule, qui est connectée à un relais qui ferme ou ouvre le circuit d'alimentation des moteurs du convoyeur, commande aussi par un relais l'activation du second dispositif d'automation.

Un dispositif électromécanique (4) composé par exemple d'une plaque de contact disposée perpendiculairement à la bande du convoyeur à l'extrémité sortante et mue par la poussée du chargement convoyée en bout de course, pourra constituer une alternative tout à fait efficace. Cette plaque pivotant sur un axe horizontal supérieur assisté de préférence d'un ressort à tension réglable, sera reliée à un contacteur sur ressort qui activera le jeu de relais.

L'automation du basculement alternatif peut être électromécanique par exemple, par l'emploi d'un interrupteur à deux états qui est activé au contact d'un bouton poussoir disposé stratégiquement au point bas d'un côté ou de l'autre du châssis du convoyeur, pour que cela coïncide avec sa course cyclique maximale. Les contacteurs à double effet ouvrent ou ferment un circuit qui commande la poussée ou la rétractation du vérin, lequel meut à son tour le bras de couplage. A défaut de moyens électromécaniques, des cellules photoélectriques ou tout autre dispositif électronique, de type connu en soi, pourront être employés avec la même efficacité.

L'équipement de décompaction et d'évacuation est essentiellement composé de l'assemblage de cylindres émotteurs disposés par couples sur toute la largeur du silo et horizontalement sur toute sa longueur. Chaque couple comprend deux cylindres émotteurs (15) garnis de dents dont l'agencement peut varier selon la composition des matières à décompacter. Les cylindres sont mus de préférence par un moteur hydraulique (18) en prise sur une extrémité d'un des cylindres, la connexion de motricité avec l'autre cylindre étant assurée soit par un jeu de rouages (17), placé à l'autre extrémité du couple et qui permet aussi d'obtenir une rotation de sens opposée au sein du couple émotteur. Une autre solution de mouvement consistera en un système de chaînes associées à des rouages en prise de chaque côté des axes des rouleaux, le moteur hydraulique actionnant un rouage moteur. Une autre alternative de mouvement peut enfin consister en un vérin qui actionne des barres de transfert associées à un cardan en prise avec des disques eux-mêmes associés aux axes des rouleaux. Ces cylindres en acier inox ou galvanisé doivent avoir une épaisseur et un diamètre suffisants pour ne pas fléchir sous la masse du compost qui vient en appui sur eux et pour que la force de torsion reste dans les limites de l'élasticité du système. Les cylindres (15) sont équipes sur toute leur surface externe d'un jeu de dents en acier (16) dont la forme et la taille qui détermine en grande partie le pouvoir coupant, d'entraînement et d'arrachement des couples émotteurs est adaptée au type de compost à mobiliser.

En leurs extrémités les cylindres émotteurs viennent en repos dans des paliers (19), eux-mêmes installés sur une poutre en acier étrésillonnée (20) entre chaque couple de cylindres avec une lame verticale, qui est reprise en soudure sur la poutre supérieure. L'agencement de ces structures de repos doit non seulement assurer la rigidité du système, mais il doit aussi permettre l'extraction d'un couple de cylindre sans qu'il soit nécessaire de démonter l'ensemble de l'assemblage émotteur.

De manière avantageuse, un convoyeur d'évacuation horizontal (21) complète ce dispositif. Il est placé en contrebas, typiquement à environ 1 mètre de l'assemblage de cylindres émotteurs (15), et peut être constitué d'un convoyeur à bande de grande largeur à charge lourde ou de préférence par un convoyeur à fond mouvant. Le rôle de ce dispositif est d'une part de recueillir le compost produit par l'émottage et de le conserver pendant quelques heures (par exemple 24 heures) sans risque de lixiviation, puis de l'évacuer du silo en un temps réduit avant d'accueillir un nouveau chargement. Une ligne d'insufflation est disposée de part et d'autre du convoyeur ou en son milieu pour diffuser dans l'andain de maturation ainsi constitué sur le convoyeur l'air respiratoire aspiré en haut du silo. Le couloir évacuation est donc fermé en ses eux extrémités, mais une sortie d'air filtré est aménagée dans la porte de sortie.

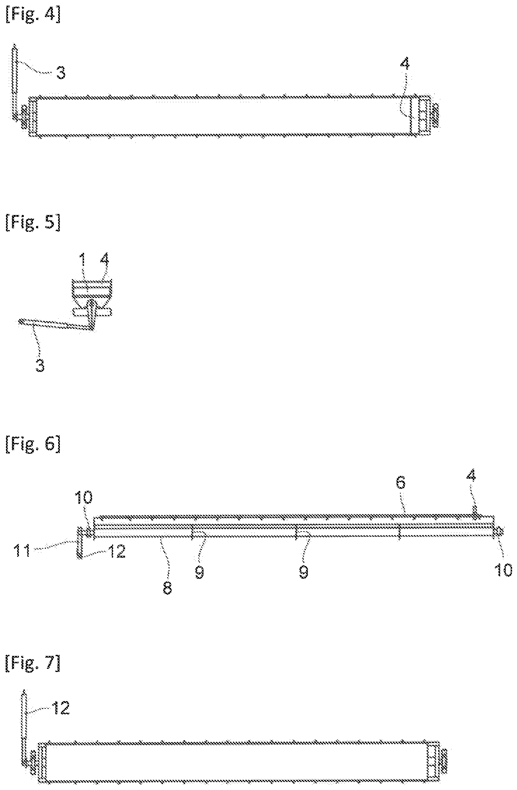

La mise en service du dispositif de chargement, tel que décrit ci-dessus, va être explicitée ci-dessous en référence aux figures 1 à 11.

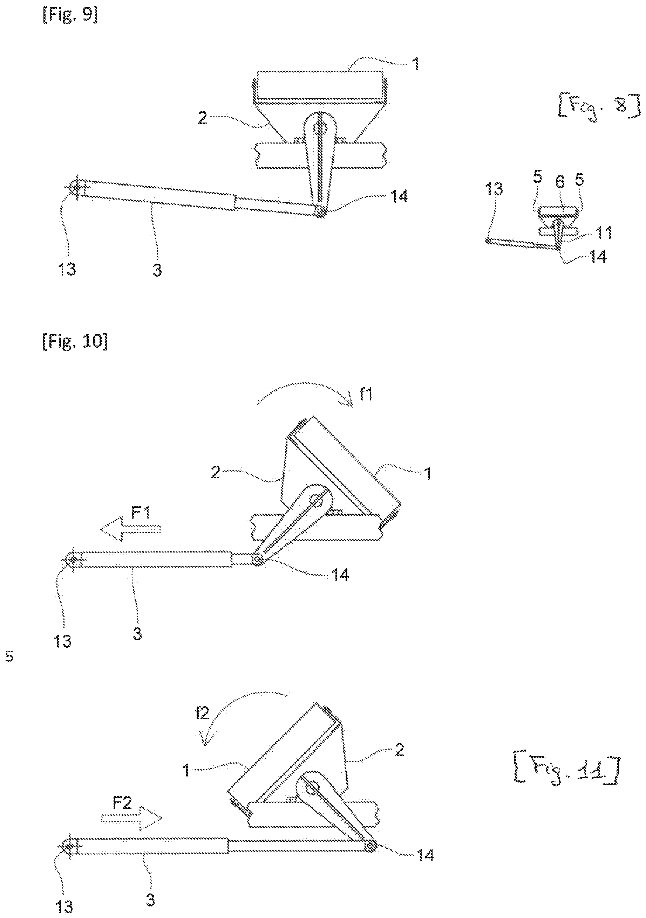

On suppose tout d'abord que le convoyeur amont, non représenté, se trouve à gauche du dispositif de chargement, sur la figure 1. On met en marche le convoyeur à bande, selon la flèche F0, tout en actionnant le convoyeur amont précité. Par conséquent une première fraction du matériau, destiné à être chargé grâce à ce dispositif, est alimentée sur la bande de ce convoyeur. Lorsque le matériau occupe l'intégralité de la bande, cet événement est détecté par le dispositif d'automation (4), et le convoyeur amont et le convoyeur principal sont arrêtés. Puis, on déplace la tige du vérin selon la flèche F1, de manière à faire pivoter le convoyeur autour de son axe longitudinal selon la flèche f1, comme le montre la figure 10. La première fraction du matériau, initialement présente à la surface de la bande, est alors déversée sur la zone de chargement de façon à former une première strate.

L'opération élémentaire ci-dessus est alors à nouveau initiée, de manière à alimenter une deuxième fraction du matériau sur la bande du convoyeur. Lorsque cette deuxième fraction occupe l'intégralité de la bande, les deux convoyeurs sont arrêtés. Puis, comme le montre la figure 11, la tige du vérin est déplacée selon la flèche F2, à savoir dans un sens opposé à celui de son déplacement matérialisé par la flèche F1. Le convoyeur pivote alors autour de son axe principal selon la flèche f2, à savoir selon un sens de basculement opposé à celui matérialisé par la flèche f1. La deuxième fraction du matériau, initialement présente la surface de la bande, est alors déversée sur la zone de chargement de façon à former une deuxième strate.

Les opérations élémentaires ci-dessus sont renouvelées, de manière à former une épaisseur de matériau formée d'autant de couches que le permet l'alimentation du silo, tout en respectant la durée minimum de rétention biologique. Entre deux opérations élémentaires successives, on procède avantageusement à un nivellement de la couche supérieure, à savoir celle qui vient d'être immédiatement déversée.

Différents exemples de réalisation de l'invention, relatifs à un procédé de compostage intensifié mis en oeuvre dans diverses installations de traitement industrielles, vont maintenant être présentés. De façon plus précise, nous décrivons ci-dessous une illustration de l'exploitation de l'invention successivement dans trois types de stations de compostage, puis dans une application de séchage de produits agricoles.
1/ Dans une station typique de compostage intensifiée en andains couloirs on dispose habituellement les matières entrantes, c'est à dire un mélange de déchets organiques structurants et volatiles broyés, grâce à un chargeur sur roue. Ce véhicule prélève une charge avec son godet à la sortie du broyeur mélangeur et va la disposer dans l'andain couloir en partant du fond de l'andain pour aller vers son extrémité ouverte. Le chargement est donc vertical et séquentiel chaque dose chargée couvre la totalité de la hauteur de l'andain. Le sol de l'andain couloir comprend habituellement une ou plusieurs lignes de ventilation forcées et éventuellement des dispositifs d'humectage latéraux. Dans les meilleures configurations une bâche ou tout autre dispositif équivalent permet de couvrir les andains.

Sous un régime d'alimentation continue ces dispositifs ne sont pas pleinement optimisés du fait que le chargement ne se fait pas en strates successives, les premiers chargements (à la fin du couloir) étant plus mûrs ne profitent pas de l'air insufflé et ne doivent pas être trop hydratés, les chargements intermédiaires (au milieu du couloir) ont un besoin décroissant mais des besoins hydriques encore importants alors que les derniers (au début du couloir) ont besoin d'apports intenses. De plus chaque chargement nécessite que la bâche ou le dispositif de recouvrement soit partiellement retiré ou écarté.

Un convoyeur à bande disposé au faîte de chaque andain couloir permettra :
- Chaque jour d'alimenter totalité ou partie des andains couloirs selon la disponibilité des matières entrantes en disposant des couches successives d'épaisseur variable sur la totalité de la surface de chaque andain avec seulement deux petites arrêtes de chargement plutôt qu'une seule grande arrête.
- Chaque jour de doser l'insufflation par le bas et l'humectage par le haut en fonction de la hauteur de charge de chaque andain et particulièrement de la charge quotidienne incrémentée en une strate.
- De laisser l'andain couvert durant toute la durée du chargement dans la mesure où le convoyeur à basculements latéraux peut très facilement être monté sur un châssis mobile.

De plus ce dispositif permettra d'éviter :
- La mobilisation et l'opération d'un chargeur sur roue, qui demande une aire de manoeuvre importante pour chaque andain, puisque le dispositif broyeur et mélangeur pourra être mobile et placé au départ du convoyeur et le charger directement.
- Le retournement fréquent des andains puisque qu'un seul retournement à mi-course du temps de rétention biologique suffira pour provoquer le départ d'une phase mésophile (selon l'enseignement du brevet français 2 936 519).

2/ Dans une station de compostage intensifiée en conteneurs on dispose habituellement les matières entrantes, c'est à dire un mélange de déchets organiques structurants et volatiles broyés, grâce à un chargeur sur roue. Ce véhicule prélève une charge avec son godet à la sortie du broyeur mélangeur et va la disposer dans la benne en effectuant autant que possible des manoeuvres de décalage afin de constituer une ébauche de couches homogènes en hauteur. Cependant, sauf à disposer d'un dispositif mécanique de régalage ou de l'intervention d'ouvriers réalisant manuellement ce régalage à l'intérieur de la benne, les strates obtenues seront géométriquement irrégulières. La benne comprend habituellement une ou plusieurs lignes de ventilation forcées en son point bas et éventuellement des dispositifs d'humectage latéraux. Dans les meilleures configurations une bâche ou une couverture rigide permet de couvrir les bennes. Pour les mêmes raisons qu'expliquées plus haut, sous un régime d'alimentation continue ces dispositifs ne sont pas pleinement optimisés du fait que le chargement ne se fait pas en strates successives homogènes géométriquement parlant.

Un convoyeur à bande alimenté par un convoyeur incliné, lui-même recevant son chargement du broyeur mélangeur, et disposé au faîte de chaque benne dans son axe et en son centre permettra :
- Chaque jour d'alimenter totalité ou partie des bennes selon la disponibilité des matières entrantes en disposant des couches successives d'épaisseur variable sur la totalité de la surface de chaque benne avec seulement deux petites arrêtes de chargement plutôt qu'une seule grande arrête.
- Chaque jour de doser l'insufflation par le bas et l'humectage par le haut en fonction de la hauteur de charge de chaque andain et particulièrement de la charge quotidienne incrémentée en une strate.
- De laisser la benne couverte durant toute la durée du chargement dans la mesure ou le convoyeur à basculements latéraux peut parfaitement être monté sur un châssis mobile sur rail qui dessert plusieurs bennes.

De plus ce dispositif permettra d'éviter :
- La mobilisation et l'opération d'un chargeur sur roue, qui demande une aire de manoeuvre importante pour chaque benne, puisque le dispositif broyeur et mélangeur pourra être mobile et placé au départ du convoyeur incliné et le charger directement.
- Le retournement fréquent des andains puisque qu'un seul retournement à mi-course du temps de rétention biologique suffira pour provoquer le départ d'une phase mésophile (selon l'enseignement du brevet français 2 936 519).

3/ Dans une station de compostage intensifiée en silos de section rectangulaire en alimentation haute et évacuation basse continues on dispose habituellement les matières entrantes, c'est à dire un mélange de déchets organiques structurants et volatiles broyés, grâce à un chargeur à bras télescopique, les substrats pré-compostés ou compostés sont extraits par le bas du silo grâce à une émotteuse ou tout autre dispositif équivalent qui charge un convoyeur d'évacuation à bande ou vis. Les manoeuvres de ce véhicule et l'effet de ces manoeuvres sont similaires à ce qui est dit plus haut, avec en plus la difficulté de diriger un godet disposé à l'extrémité d'une fourche ou d'un bras télescopique. Par ailleurs pour les mêmes raisons qu'expliquées plus haut, sous un régime d'alimentation continue ces dispositifs ne sont pas pleinement optimisés du fait que le chargement ne se fait pas en strates successives homogènes géométriquement parlant. Ce défaut est d'autant plus important que dans les silos on peut accumuler jusqu'à 6 m ou plus de substrat.

Un convoyeur à bande alimenté par un convoyeur incliné lui-même recevant son chargement du broyeur mélangeur, et disposé au faîte de chaque silo dans son axe et en son centre permettra :
- Chaque jour d'alimenter totalité ou partie des bennes selon la disponibilité des matières entrantes en disposant des couches successives d'épaisseur variable sur la totalité de la surface de chaque benne avec seulement deux petites arrêtes de chargement plutôt qu'une seule grande arrête.
- Chaque jour de doser l'insufflation par le bas et l'humectage par le haut en fonction de la hauteur de charge de chaque andain et particulièrement de la charge quotidienne incrémentée en une strate
- De laisser la benne couverte durant toute la durée du chargement dans la mesure où le convoyeur à basculements latéraux peut parfaitement être monté sur un châssis mobile sur rail qui dessert plusieurs bennes.

De plus ce dispositif permettra d'éviter :
- La mobilisation et l'opération d'un chargeur télescopique sur roue, qui demande une aire de manoeuvre importante pour chaque benne, puisque le dispositif broyeur et mélangeur pourra être mobile et placé au départ du convoyeur incliné et le charger directement.

4/ Dans une unité de séchage de produits agricoles ou sylvicoles il est fréquemment requis de disposer les substrats humides tels que des feuilles, de la paille, des sciures grossières, du bois ou des écorces déchiquetés dans une enceinte rectangulaire fermée sur tous ses côtés, telle une benne ou un silo, qui reçoit en sa base un apport d'air chaud ou très chaud selon les produits et le processus mis en oeuvre. Généralement l'air humide qui résulte de l'injection d'air primaire chaud est évacué par convection naturelle ou par aspiration au point haut de cette enceinte et à la fin d'un cycle on obtient la dessiccation recherchée pour les substrats traités. Or si l'on procède dans cette benne ou ce silo à un chargement géométriquement irrégulier, comme décrit plus haut, parce que le moyen de chargement est un chargeur à godet, le séchage sera incomplet dans certaines zones du produit traité, pour la raison que la convection naturelle ou forcée par aspiration au point haut va faire circuler de l'air plus ou moins humide dans les zones de dépressions de chargement.

Il est aussi souvent pratiqué un séchage traditionnel par exposition au vent et au soleil pour de matériaux qui ne peuvent être accumulés en couches épaisses, c'est le cas par exemple des broyats de manioc, des grains de café ou de chocolat, des gousses de vanille. Ce séchage traditionnel mais nécessitant une automation dans des configurations industrielles est réalisé dans des bacs de faible profondeur, au fond et au couvert souvent grillagés. Le chargement mécanique avec régalage manuel ou un chargement totalement manuel permettent de constituer des couches géométriquement homogènes. Or une telle pratique tend à disqualifier économiquement les entreprises du fait de leur coût opératoire élevé surtout pour des produits à faible plus-value. L'emploi d'un convoyeur à basculement latéral alimenté par un convoyeur incliné disposé au-dessus d'un banc de remplissage qui reçoit les bacs de séchage permettra à l'évidence d'assurer des chargements équilibrés, beaucoup plus faciles à régaler avec une cadence améliorée tout en préservant le mode traditionnel de traitement des produits.

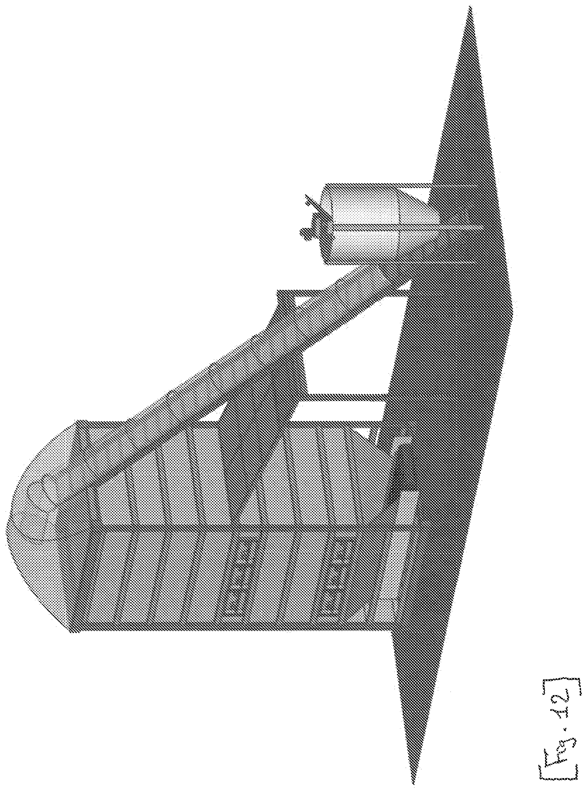

La figure 12 illustre une variante de réalisation de l'invention. Selon cette dernière, le procédé de chargement décrit ci-dessus est mis en oeuvre, en particulier avec ses dispositifs de décompaction, dans un silo de section carrée ou rectangulaire de petite dimension. Dans cet esprit, il s'agit par exemple du petit côté d'un conteneur de 20 pieds, dont les dimensions sont typiquement de 2,20 m par 2,70 m.

Ce mode de réalisation ne fait pas nécessairement appel au convoyeur supérieur à basculement latéral, qui a été décrit ci-dessus. En revanche, tous les autres éléments mécaniques décrits et revendiqués peuvent être intégrés dans ce mode de réalisation, selon toutes les combinaisons techniquement compatibles pour l'homme du métier.

## Revendications

1. Procédé de chargement d'un matériau en strates, procédé dans lequel :
- on alimente, sur un convoyeur à bande (1) situé au-dessus d'une zone de chargement, une première fraction dudit matériau destinée à former une première strate,
- on utilise des moyens (3) de basculement du convoyeur à bande (1) autour de son axe longitudinal (2) et on fait basculer le convoyeur à bande autour de son axe longitudinal (2), de manière à déverser l'intégralité de ladite première fraction sur une zone de réception d'une enceinte, notamment de type benne, silo ou couloir, et à former ainsi ladite première strate,
- on alimente, sur ledit convoyeur à bande (1), une fraction suivante du matériau destinée à former une strate suivante,
- on utilise lesdits moyens (3) de basculement du convoyeur à bande (1) et on fait basculer le convoyeur autour de son axe longitudinal (2), de manière à déverser l'intégralité de ladite strate suivante sur la zone de réception et à former ainsi ladite strate suivante,
sachant que ledit matériau en strates est de préférence formé de déchets organiques, notamment de compost.

2. Procédé selon la revendication précédente, dans lequel :
- on fait basculer le convoyeur à bande (1) autour de son axe longitudinal (2) dans un premier sens (flèche f1), de manière à déverser l'intégralité de ladite première fraction sur la zone de réception,
- on fait basculer le convoyeur à bande autour de son axe longitudinal dans un second sens (flèche f2), opposé audit premier sens, de manière à déverser l'intégralité de ladite strate suivante sur la zone de réception.

3. Procédé selon l'une des revendications précédentes, dans lequel on nivelle ladite première strate formée sur la zone de réception, avant de faire basculer la fraction suivante de matériau, et dans lequel de préférence on réalise la contention et la décompaction des strates accumulées dans l'enceinte à l'issue de son trajet entre le convoyeur à bande et la zone de réception.

4. Procédé selon l'une des revendications précédentes, dans lequel on alimente le convoyeur à bande (1) au moyen d'un convoyeur amont, notamment un convoyeur à bande oblique à tasseaux ou un convoyeur vertical à godets.

5. Procédé selon l'une des revendications précédentes, dans lequel on forme autant de strates successives que le rythme d'alimentation de l'enceinte le permet, tout en respectant la durée minimale de rétention biologique qui peut varier de 10 jours à 30 jours selon la composition du mélange de matières à traiter.

6. Procédé selon l'une des revendications précédentes, dans lequel on utilise des moyens d'automation (4), aptes à arrêter le déroulement de la bande du convoyeur à bande lorsque celui-ci est chargé, et/ou à alterner automatiquement le sens de basculement dudit convoyeur.

7. Procédé selon l'une des revendications précédentes, dans lequel on utilise, pour le basculement dudit convoyeur à bande, un vérin à double effet (3), dont la tige (14) est articulée par rapport audit axe longitudinal, et dans lequel, de préférence, on déplace la tige dudit vérin par rapport au corps du vérin, de manière à faire basculer ledit convoyeur à bande.

8. Dispositif de chargement d'un matériau en strates, notamment de déchets organiques, tels que du compost, dispositif comprenant :
- un convoyeur à bande (1), apte à recevoir une fraction dudit matériau,
- des moyens d'alimentation, permettant l'alimentation en matériau dudit convoyeur à bande,
- des moyens de réception de ladite fraction dudit matériau, situés à l'aplomb du convoyeur à bande,
**caractérisé en ce que** le dispositif comprend des moyens (3) de basculement du convoyeur à bande (1) autour de son axe longitudinal (2), ledit dispositif étant notamment adapté pour la mise en oeuvre du procédé selon l'une des revendications précédentes.

9. Dispositif selon la revendication précédente, comprenant en outre des moyens (15) de contention et de décompaction de ladite fraction de matériau, lors de son trajet entre le convoyeur à bande et la zone de réception, lesdits moyens de contention et de décompaction comprenant de préférence une série de couples de rouleaux (15).

10. Dispositif selon l'une des revendications 8 à 9, dans lequel les moyens de basculement (3) comprennent un vérin à double effet, dont la tige (14) est articulée par rapport audit axe longitudinal.

11. Dispositif selon l'une des revendications 8 à 10, dans lequel ce dispositif comprend en outre un convoyeur amont, notamment un convoyeur à bande oblique à tasseaux ou un convoyeur vertical à godets, apte à alimenter ledit convoyeur à bande.

12. Dispositif selon l'une des revendications 8 à 11, dans lequel ce dispositif comprend en outre un convoyeur d'évacuation (21), situé en aval des moyens de réception, ledit convoyeur d'évacuation étant notamment un convoyeur à bande aval, ou plus préférentiellement un convoyeur à fond mouvant.

13. Dispositif selon l'une des revendications 8 à 12, dans lequel ce dispositif comprend en outre des moyens d'automation (4), aptes à arrêter le déroulement de la bande du convoyeur à bande lorsque celui-ci est chargé, et/ou à alterner automatiquement le sens de basculement dudit convoyeur.

14. Installation de traitement d'un matériau en strates, notamment du type station de compostage intensifié en andains couloirs, station de compostage intensifié en conteneurs, station de compostage intensifié en silos de section rectangulaire en alimentation haute et évacuation basse continues, ou encore unité de séchage de produits agricoles ou sylvicoles, ladite installation comprenant au moins un dispositif de chargement selon l'une des revendications 8 à 13.

## Patentansprüche

1. Verfahren zum Laden eines Materials in Schichten, bei dem:
- eine erste Fraktion des Materials, die zur Bildung einer ersten Schicht bestimmt ist, einem Bandförderer (1) zugeführt wird, der sich über einer Ladezone befindet,
- Mittel (3) zum Kippen des Bandförderers um seine Längsachse (2) benutzt werden und der Bandförderer um seine Längsachse (2) gekippt wird, um die gesamte erste Fraktion auf einen Aufnahmebereich eines Behälters, insbesondere vom Typ Container, Silo oder Korridor, abzugeben und so diese erste Schicht zu bilden,
- eine nächste Materialfraktion, die zur Bildung einer nächsten Schicht bestimmt ist, dem Förderband (1) zugeführt wird,
- die Mittel (3) zum Kippen des Bandförderers um seine Längsachse (2) benutzt werden und der Bandförderer um seine Längsachse (2) gekippt wird, um die gesamte nächste Schicht auf die Aufnahmezone abzugeben und so die nächste Schicht zu bilden,
wobei das besagte Material in Schichten bevorzugt aus organischen Abfällen wie insbesondere Kompost besteht.

2. Verfahren nach dem vorhergehenden Anspruch, bei dem:
- der Bandförderer (1) um seine Längsachse (2) in einer ersten Richtung (Pfeil f1) gekippt wird, um die gesamte erste Fraktion auf die Aufnahmezone abzugeben,
- der Bandförderer um seine Längsachse in einer zweiten Richtung (Pfeil f2) gekippt wird, die der ersten Richtung entgegengesetzt ist, um die gesamte nächste Schicht auf den Aufnahmebereich abzugeben.

3. Verfahren nach einem der vorhergehenden Ansprüche, bei dem die erste, auf der Aufnahmezone gebildete Schicht vor dem Kippen der nächsten Materialfraktion eingeebnet wird, und in welchem vorzugsweise das Aufnehmen und Zerkleinern der in dem Behälter angesammelten Schichten am Ende ihrer Fortbewegung zwischen dem Bandförderer und der Empfangszone erfolgt.

4. Verfahren nach einem der vorhergehenden Ansprüche, bei dem die Beschickung des Bandförderers (1) mittels eines vorgeschalteten Förderers, insbesondere eines Schrägbandförderers mit Stollen oder eines Vertikalbecherwerks, erfolgt.

5. Verfahren nach einem der vorhergehenden Ansprüche, bei dem so viele aufeinanderfolgende Schichten gebildet werden, wie es die Versorgungsrate des Behälters zulässt, wobei die minimale biologische Verweildauer eingehalten wird, die je nach Zusammensetzung der Mischung der zu behandelnden Materialien zwischen 10 und 30 Tagen variieren kann.

6. Verfahren nach einem der vorhergehenden Ansprüche, bei dem Automatisierungsmittel (4) verwendet werden, die in der Lage sind, das Abwickeln des Riemens des Bandförderers zu stoppen, wenn dieser beladen ist, und/oder die Kipprichtung des Förderers automatisch zu ändern.

7. Verfahren nach einem der vorhergehenden Ansprüche, bei dem zum Kippen des Bandförderers ein doppelt wirkender Zylinder (3) verwendet wird, dessen Stange (14) relativ zur Längsachse gelenkig ist, und bei dem vorzugweise die Stange des Zylinders relativ zum Körper des Zylinders bewegt wird, um das Förderband zu kippen.

8. Vorrichtung zum schichtweisen Laden eines Materials, insbesondere organischer Abfälle wie Kompost, wobei die Vorrichtung Folgendes umfasst:
- einen Bandförderer (1), der eine Fraktion des besagten Materials aufnehmen kann,
- Zuführmittel, die die Zufuhr von Material zum Bandförderer ermöglichen,
- Mittel zur Aufnahme der genannten Materialfraktion, die sich direkt über dem Bandförderer befinden,
**dadurch gekennzeichnet, dass** die Vorrichtung Mittel (3) zum Kippen des Bandförderers (1) um seine Längsachse (2) aufweist, wobei die besagte Vorrichtung insbesondere zur Ausführung des Verfahrens nach einem der vorstehenden Ansprüche geeignet ist.

9. Vorrichtung nach dem vorhergehenden Anspruch, die außerdem Mittel (15) zum Aufnehmen und Zerkleinern der Materialfraktion während ihrer Fortbewegung zwischen dem Bandförderer und der Empfangszone umfasst, wobei diese Mittel zum Aufnehmen und Zerkleinern eine Reihe von Rollenpaaren (15) umfassen.

10. Vorrichtung nach einem der Ansprüche 8 bis 9, bei der die Mittel zum Kippen (3) einen doppelt wirkenden Zylinder umfassen, dessen Stange (14) relativ zur Längsachse gelenkig ist.

11. Vorrichtung nach einem der Ansprüche 8 bis 10, wobei diese Vorrichtung außerdem einen vorgeschalteten Förderer, insbesondere einen Schrägbandförderer mit Stollen oder ein Vertikalbecherwerk, umfasst, der den Förderer versorgen kann.

12. Vorrichtung nach einem der Ansprüche 8 bis 11, wobei diese Vorrichtung außerdem einen Evakuierungsförderer (21) umfasst, der stromabwärts der Aufnahmeeinrichtung angeordnet ist, wobei der Evakuierungsförderer insbesondere ein nachgeschalteter Bandförderer oder noch bevorzugter ein Förderbodenförderer ist.

13. Vorrichtung nach einem der Ansprüche 8 bis 12, wobei diese Vorrichtung außerdem Automatisierungsmittel (4) umfasst, die in der Lage sind, das Abwickeln des Bandes des Bandförderers zu stoppen, wenn dieser beladen ist, und/oder die Kipprichtung des Förderers automatisch zu ändern.

14. Anlage zur schichtweisen Verarbeitung eines Materials, insbesondere vom Typ der Intensivkompostierungsstation in Mietengassen, der Intensivkompostierungsstation in Containern, der Intensivkompostierungsstation in Silos mit rechteckigem Querschnitt mit kontinuierlicher oberer Beschickung und unterer Evakuierung, oder auch Trocknungseinheit von landwirtschaftlichen oder Forstprodukten, wobei die Anlage mindestens eine Ladevorrichtung nach einem der Ansprüche 8 bis 13 umfasst.

## Claims

1. Method for loading a material in layers, wherein:
- a first fraction of said material intended to form a first layer is fed to a belt conveyor (1) located above a loading zone,
- the means (3) for tilting the belt conveyor (1) about its longitudinal axis (2) are used and the conveyor is tilted about its longitudinal axis (2), such that the entire first fraction is poured into a receiving zone in a receptacle, in particular a bin, silo or corridor, and thereby said first layer is formed,
- a subsequent fraction of the material intended to form a subsequent layer is fed to said conveyor (1),
- said means (3) for tilting the belt conveyor (1) are used and the conveyor is tilted about its longitudinal axis (2), such that the entire subsequent layer is poured onto the receiving zone and thereby said subsequent layer is formed,
said layered material is preferably formed of organic materials, particularly compost.

2. Method according to the preceding claim, wherein:
- the conveyor is tilted about its longitudinal axis in a first direction (arrow f1), such that the entire said first fraction is poured onto the receiving zone,
- the conveyor is tilted about its longitudinal axis in a second direction (arrow f2), opposite said first direction, such that the entire said subsequent layer is poured onto the receiving zone.

3. Method according to any one of the preceding claims, wherein said first layer formed on the receiving zone is levelled, before tilting the subsequent material fraction, and wherein preferably the containing and decompaction of the layers accumulated in the receptacle are carried out after the trajectory thereof in two successive phases between the tilting conveyor and the receiving zone.

4. Method according to one of the preceding claims, wherein the belt conveyor is fed by means of an upstream conveyor, particularly an oblique belt conveyor or a vertical cup conveyor.

5. Method according to one of the preceding claims, wherein as many successive layers as the feed rate of the receptacle allows are formed, while observing the minimum biological retention times which can vary from 10 days to 30 days according to the composition of the mixture of materials to be treated.

6. Method according to one of the preceding claims, wherein automation means (4) are used, capable of stopping the travel of the conveyor belt when the latter is loaded, and/or automatically alternating the tilting direction of said conveyor.

7. Method according to one of the preceding claims, wherein, for tilting said belt conveyor, a dual-action actuator (3), in which the rod (14) is articulated in relation to said longitudinal axis, is used, and wherein preferably the rod of said actuator is moved in relation to the actuator, so as to tilt said belt conveyor.

8. Device for loading a material in layers, particularly organic waste, such as compost, said device comprising:
- a belt conveyor (1), capable of receiving a fraction of said material,
- feeding means, for feeding said belt conveyor with material,
- means for receiving said fraction of said material, located plumb with the belt conveyor,
**characterized in that** said device comprises means (3) for tilting the belt conveyor (1), about its longitudinal axis, said device being in particular suitable for implementing the method according to any of the preceding claims.

9. Device according to the preceding claim, further comprising means (15) for containing and decompacting said material fraction, during the trajectory thereof between the conveyor and the receiving zone, said means for containing and decompaction comprising preferably a series of pairs of rollers (15).

10. Device according to one of claims 8 to 9, wherein the tilting means (3) comprise a dual-action actuator, in which the rod (14) is articulated in relation to said longitudinal axis.

11. Device according to one of claims 8 to 10, wherein this device further comprises an upstream conveyor, particularly an oblique cleated belt conveyor or a vertical cup conveyor, capable of feeding said belt conveyor.

12. Device according to one of claims 8 to 11, wherein this device further comprises a discharge conveyor (21), located downstream from the receiving means, said discharge conveyor being particularly a downstream belt conveyor, or more preferably an endless floor conveyor.

13. Device according to one of claims 8 to 12, wherein this device further comprises automation means (4), capable of stopping the travel of the conveyor belt when the latter is loaded, and/or automatically alternating the tilting direction of said conveyor.

14. Installation for treating a material in layers, particularly such as an intensified composting station in corridor windrows, intensified composting station in silos of rectangular cross-section with continuous top feed and bottom discharge, or unit for drying agricultural or sylvicultural products, said installation comprising at least one loading device according to one of claims 8 to 13.
